# FASCICULE DE BREVET EUROPEEN

(11) **EP 3 221 158 B1**
(45) Date de publication et mention de la délivrance du brevet: **12.12.2018**
(21) Numéro de dépôt: 15781040.9
(22) Date de dépôt: 29.09.2015
(51) Int. Cl.: B60C 9/22, B60C 9/04

(54) **ARMATURE DE CARCASSE DE PNEUMATIQUE POUR MOTO**
KARKASSENVERSTÄRKUNG FÜR EINEN MOTORRADREIFEN
CARCASS REINFORCEMENT FOR MOTORBIKE TYRE

(30) Priorité: 18.11.2014 FR 1461105
(43) Date de publication de la demande: 27.09.2017
(73) Titulaire: Compagnie Générale des Etablissements Michelin, 63000 Clermont-Ferrand (FR)
(72) Inventeur: VILPERT, Benjamin, F-63040 Clermont-Ferrand Cedex 9 (FR); CURAT, Alexandra, F-63040 Clermont-Ferrand Cedex 9 (FR); LAURENT, Christophe, F-63040 Clermont-Ferrand Cedex 9 (FR); BOUCHET, Romain, F-63040 Clermont-Ferrand Cedex 9 (FR)
(74) Mandataire: Bauvir, Jacques
(86) Numéro de dépôt international: PCT/EP2015/072337
(87) Numéro de publication internationale: WO 2016/078809

(56) Documents cités:
- EP-A2- 1 004 460
- US-A- 4 773 462

## Description

L'invention concerne un pneumatique radial destiné à équiper un véhicule motorisé à deux roues, tel qu'une motocyclette ou moto.

Bien que non limitée à une telle application, l'invention sera décrite plus particulièrement en référence à un pneumatique radial destiné à être monté à l'arrière d'une moto, et encore plus particulièrement à l'arrière d'une moto du segment sport.

Dans ce qui suit, et par convention, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique. Les angles, par rapport à la direction circonférentielle, mentionnés dans ce qui suit, ne sont pas orientés et sont indiqués en valeur absolue.

De façon générale, un pneumatique comprend une bande de roulement, destinée à venir en contact avec le sol par l'intermédiaire de la surface de roulement, et reliée par l'intermédiaire de deux flancs à deux bourrelets, assurant la liaison mécanique entre le pneumatique et la jante sur laquelle il est monté.

Un pneumatique radial comprend également une armature de renforcement, comprenant une armature de sommet, radialement intérieure à la bande de roulement, et une armature de carcasse, le plus souvent radialement intérieure à l'armature de sommet.

L'armature de sommet d'un pneumatique radial pour moto comprend généralement au moins une couche de sommet constituée de renforts enrobés dans un matériau polymérique de type élastomère. Les renforts sont le plus souvent constitués d'un matériau textile, tel que l'aramide, mais peuvent être également métalliques. Différentes architectures d'armature de sommet ont été proposées par l'homme du métier, selon que le pneumatique est destiné à une monte à l'arrière ou à une monte à l'avant de la moto, dans le cas d'une moto sport. Dans le cas d'une monte à l'arrière, l'armature de sommet est constituée le plus souvent d'une couche de sommet circonférentielle, comprenant des renforts circonférentiels, c'est-à-dire formant, avec la direction circonférentielle, un angle sensiblement nul, au plus égal à 5°. Cette couche de sommet circonférentielle est généralement obtenue par enroulement hélicoïdal d'une bandelette d'au moins un élément de renforcement enrobé d'élastomère. Dans le cas d'une monte à l'avant, l'armature de sommet comprend également une couche de sommet circonférentielle ou, parfois, deux couches de sommet de travail, comprenant des renforts sensiblement parallèles entre eux dans chaque couche, et croisés d'une couche à la suivante, en formant, avec la direction circonférentielle, des angles généralement compris entre 15° et 35°.

L'armature de carcasse d'un pneumatique radial pour moto comprend généralement au moins une couche de carcasse constituée de renforts le plus souvent en matériau textile enrobés dans un matériau polymérique de type élastomère. Une couche de carcasse peut être retournée ou non retournée.

Une couche de carcasse est dite retournée, lorsqu'elle comprend une partie principale, reliant les deux bourrelets entre eux et s'enroule, dans chaque bourrelet, de l'intérieur vers l'extérieur du pneumatique autour d'une tringle, pour former un retournement ayant une extrémité libre. La tringle est un élément de renforcement circonférentiel, le plus souvent métallique et enrobé dans un matériau généralement élastomérique ou textile. Dans le cas d'une couche de carcasse retournée, le retournement, dans chaque bourrelet, permet l'ancrage de la couche de carcasse retournée à la tringle. La portion de tringle en contact avec la couche de carcasse retournée contribue, en particulier au gonflage, à la reprise par couplage des efforts de tension dans la couche de carcasse retournée. Cette contribution à la reprise d'efforts de tension dépend de la rigidité de torsion de la tringle et de la géométrie du retournement. Dans le cas d'une forte rigidité de torsion de la tringle, les efforts de tension au gonflage sont essentiellement repris par la tringle, avec une contribution secondaire du retournement. Dans le cas d'une plus faible rigidité de torsion de la tringle, les efforts de tension sont repris à la fois par couplage avec la tringle et par cisaillement entre le retournement et les matériaux qui lui sont adjacents, ce qui nécessite un retournement suffisamment long, c'est-à-dire dont l'extrémité est suffisamment radialement éloignée du point le plus radialement intérieur de la tringle. Un retournement est dit long lorsque la distance radiale entre son extrémité et le point le plus radialement intérieur de la tringle est au moins égale à 0.3 fois la hauteur de section théorique du pneumatique telle que définie par les normes de la European Tyre and Rim Technical Organisation ou ETRTO.

Une couche de carcasse est non retournée, lorsqu'elle est constituée uniquement d'une partie principale, reliant les deux bourrelets entre eux, sans s'enrouler autour d'une tringle. Dans le cas d'une couche de carcasse non retournée, chacune des deux portions d'extrémités de ladite couche de carcasse non retournée peut être couplée soit avec le retournement d'au moins une couche de carcasse retournée, soit avec la partie principale d'au moins une couche de carcasse retournée. Par couplage, on entend une zone de recouvrement entre la couche de carcasse non retournée et une couche de carcasse retournée, permettant une reprise des efforts de tension par cisaillement.

Les renforts de la partie principale d'une couche de carcasse retournée ou non retournée sont sensiblement parallèles entre eux et forment, avec la direction circonférentielle, un angle compris entre 65° et 90°.

Une architecture connue de pneumatique radial pour monte à l'arrière d'une moto, décrite dans le document WO-2011107543, comprend une armature de carcasse, constituée de deux couches de carcasse, radialement intérieure à une armature de sommet, constituée d'une couche de sommet circonférentielle. Les renforts respectifs de chacune des deux couches de carcasse forment, avec la direction circonférentielle, des angles de signe opposé et compris entre 70° et 85°. Une telle architecture, du fait de l'effet de triangulation résultant du croisement des renforts d'une couche de carcasse à l'autre, en particulier dans les flancs, garantit une stabilité satisfaisante de la moto dans une trajectoire en courbe, dans laquelle l'angle de carrossage du pneumatique arrière, entre le plan équatorial du pneumatique et le plan perpendiculaire au sol et tangent à la trajectoire, est usuellement au moins égal à 30°. Mais une telle architecture présente l'inconvénient de ne pas permettre d'atteindre un compromis optimal entre la stabilité dans une trajectoire en courbe et la stabilité dans une trajectoire en ligne droite. Ce compromis de performances est en effet important en particulier dans le domaine des motos à usage sportif dont l'usage est caractérisé par un besoin en adhérence sur sol sec et une utilisation sur un circuit comprenant au moins 50% de trajectoire en courbe. Le document EP-A-1004460 divulgue un pneu d'une moto, comprenant une armature de carcasse, constituée de deux couches de carcasse, formées par une pluralité de cordes de renfort telles que des cordes de nylon, s'étendant à un angle de 60° à 90° par rapport à la direction circonférentielle.

Les inventeurs se sont donnés pour objectif de concevoir une armature de carcasse de pneumatique radial pour une monte à l'arrière d'une moto, permettant de garantir un bon compromis entre la stabilité de la moto dans une trajectoire en ligne droite à haute vitesse et la stabilité de la moto dans une trajectoire en courbe à fort angle de carrossage.

Ce but a été atteint, selon l'invention, par un pneumatique pour véhicule motorisé à deux roues de type moto comprenant :
- une bande de roulement reliée par deux flancs à deux bourrelets, chaque bourrelet comprenant un élément de renforcement circonférentiel métallique ou tringle,
- une armature de sommet s'étendant radialement à l'intérieur de la bande de roulement et comprenant au moins une couche de sommet, la au moins une couche de sommet comprenant des renforts parallèles entre eux formant, avec une direction circonférentielle du pneumatique, un angle au plus égal à 5°,
- une armature de carcasse s'étendant radialement à l'intérieur de l'armature de sommet jusque dans les bourrelets et comprenant au moins deux couches de carcasse, chacune des au moins deux couches de carcasse comprenant des renforts parallèles entre eux formant, avec la direction circonférentielle du pneumatique, un angle au moins égal à 65°,
- les renforts d'une première couche de carcasse formant, avec la direction circonférentielle, un angle au plus égal à 75°,
- les renforts d'une deuxième couche de carcasse formant, avec la direction circonférentielle, un angle au moins égal à 80° et au plus égal à 90°,
- la différence entre les angles des renforts respectifs des première et deuxième couches de carcasse est au moins égale à 10° et au plus égale à 20°
- et les angles (A1, A2) des renforts respectifs des première et deuxième couches de carcasse sont orientés dans le même sens.

L'armature de sommet, s'étendant radialement à l'intérieur de la bande de roulement, comprend au moins une couche de sommet, comprenant des renforts parallèles entre eux formant, avec une direction circonférentielle du pneumatique, un angle au plus égal à 5°. Ceci signifie que les renforts de ladite couche de sommet sont sensiblement parallèles à la direction circonférentielle du pneumatique, c'est-à-dire sensiblement circonférentiels. Cet intervalle d'angle concerne l'angle mesuré en tout point de la couche de sommet, compris entre les deux extrémités axiales de ladite couche de sommet. Par ailleurs cet angle peut varier selon le point de la couche de sommet considéré.

L'armature de carcasse, s'étendant radialement à l'intérieur de l'armature de sommet jusque dans les bourrelets, comprend au moins deux couches de carcasse dont les renforts respectifs parallèles entre eux forment, avec la direction circonférentielle du pneumatique, un angle au moins égal à 65°. Cet intervalle d'angle concerne l'angle mesuré en tout point de chaque couche de carcasse, compris entre les deux extrémités de ladite couche de carcasse. Par ailleurs cet angle peut varier selon le point de la couche de carcasse considéré.

Selon l'invention, les renforts d'une première couche de carcasse forment, avec la direction circonférentielle, un angle au plus égal à 75°, alors que les renforts d'une deuxième couche de carcasse forment, avec la direction circonférentielle, un angle au moins égal à 80° et au plus égal à 90°. En d'autres termes, les renforts de la première couche de carcasse forment, avec la direction circonférentielle, un angle plus faible que ceux de la deuxième couche de carcasse qui sont sensiblement radiaux, ce qui implique une triangulation de l'armature de carcasse. De plus, la différence entre les angles des renforts respectifs des première et deuxième couches de carcasse est au moins égale à 10° et au plus égale à 20°, c'est-à-dire que la triangulation doit être significative pour être efficace. Enfin, les angles (A1, A2) des renforts respectifs des première et deuxième couche de carcasse sont orientés dans le même sens, c'est-à-dire sont de même signe dans un plan orienté défini par les directions circonférentielle et axiale du pneumatique.

Une telle triangulation de l'armature de carcasse, à la fois dans la portion de sommet et dans les portions de flanc, permet d'avoir simultanément une rigidité latérale et une rigidité de dérive élevées.

La rigidité latérale est la force latérale générée par le pneumatique, lorsqu'on lui applique un déplacement latéral, c'est-à-dire parallèle à la direction axiale, égale à 1 mm. Plus la rigidité latérale, qui dépend principalement de la triangulation de l'armature de carcasse dans les portions de flanc, est élevée, plus la stabilité en ligne droite de la moto est élevée.

La rigidité de dérive est la force latérale générée par le pneumatique ou poussée de dérive, lorsqu'on lui applique un angle de dérive de 1°, l'angle de dérive étant l'angle formé par la droite, intersection du plan équatorial du pneumatique avec sol, et la droite tangente à la trajectoire. Plus la rigidité de dérive, qui dépend essentiellement de la triangulation de l'armature de carcasse dans la portion de sommet, est élevée, plus la stabilité en courbe de la moto est élevée.

Selon un mode de réalisation préféré, l'armature de carcasse est constituée de deux couches de carcasse, qui constitue un bi-nappe de carcasse. C'est le nombre de couches de carcasse usuellement utilisé pour minimiser la masse du pneumatique et son coût de fabrication.

Avantageusement, la première couche de carcasse est une couche de carcasse retournée autour de la tringle de chaque bourrelet. Autrement dit, la première couche de carcasse dont les renforts forment, avec la direction circonférentielle, le plus petit angle au plus égal à 75°, est une couche de carcasse retournée, comprenant une portion principale reliant les deux bourrelets entre eux et s'enroulant, dans chaque bourrelet, de l'intérieur vers l'extérieur du pneumatique autour d'une tringle, pour former un retournement ayant une extrémité libre. Le procédé de pose d'une couche de carcasse retournée, lors de l'empilage des éléments constitutifs du pneumatique, est un procédé usuel dans le domaine de la fabrication des pneumatiques.

Egalement avantageusement la première couche de carcasse est radialement intérieure à la deuxième couche de carcasse. La couche de carcasse dont les renforts forment, avec la direction circonférentielle, le plus petit angle au moins égal à 65° et au plus égal à 75°, est ainsi radialement intérieure à la couche de carcasse dont les renforts forment, avec la direction circonférentielle, le plus grand angle au moins égal à 80° et au plus égal à 90°. Préférentiellement, la première couche de carcasse est également une couche de carcasse retournée.

La deuxième couche de carcasse est une couche de carcasse non retournée autour de la tringle de chaque bourrelet. Dans le cas particulier où l'armature de carcasse est constituée uniquement de deux couches de carcasse et où la première couche de carcasse est retournée et radialement intérieure à la deuxième couche de carcasse, une portion d'extrémité de la deuxième couche de carcasse est soit en contact avec la partie principale de la première couche de carcasse retournée, soit avec le retournement de la première couche de carcasse retournée. Dans le cas d'un recouvrement avec le retournement de la première couche de carcasse retournée, la portion d'extrémité de la deuxième couche de carcasse est soit axialement extérieure au retournement, soit, préférentiellement, axialement intérieure audit retournement.

Les renforts respectifs des première et deuxième couches de carcasse sont usuellement constitués de matériau textile. Les matériaux textiles couramment utilisés sont le polyester ou le nylon. Ces matériaux sont couramment utilisés dans le domaine des pneumatiques pour moto, en raison d'un compromis intéressant entre leurs performances et leur coût de fabrication. L'aramide, matériau textile encore plus performant en termes de module d'élasticité et de force à rupture, peut être utilisé dans des pneumatiques à hautes performances, tels que les pneumatiques pour moto de compétition.

Préférentiellement les renforts respectifs des première et deuxième couches de carcasse sont constitués du même matériau textile, afin de standardiser le matériau constitutif des renforts des couches de carcasse et donc de minimiser les coûts de production.

Selon une variante préférée de matériau textile, les renforts respectifs des première et deuxième couches de carcasse sont constitués de polyester, qui présente un bon compromis performances/coût.

Avantageusement l'armature de sommet est constituée d'une seule couche de sommet. Par conséquent cette unique couche de sommet comprend des renforts parallèles entre eux formant, avec une direction circonférentielle du pneumatique, un angle au plus égal à 5°. Une couche de sommet à renforts circonférentiels est couramment utilisée dans un pneumatique destiné à équiper l'arrière d'une moto, pour augmenter la rigidité circonférentielle du pneumatique et lui permettre ainsi d'atteindre des hautes vitesses sans subir de déformations trop élevées.

Préférentiellement les renforts de la au moins une couche de sommet sont constitués de matériau textile, de préférence de polyamide aromatique. En effet, le module d'élasticité élevé d'un renfort en polyamide aromatique, tel que l'aramide, contribue à augmenter la rigidité circonférentielle du pneumatique déjà élevée compte tenu de la direction sensiblement circonférentielle des renforts de la couche de sommet.

Chacune des au moins deux couches de carcasse ayant une portion de sommet s'étendant symétriquement de part et d'autre d'un plan équatorial passant par le milieu de la bande de roulement et perpendiculaire à un axe de rotation du pneumatique, il est enfin avantageux que la distance radiale moyenne respectivement entre les renforts respectifs de deux couches de carcasse consécutives, dans leurs portions de sommet, d'une part, et entre les renforts respectifs de la couche de carcasse la plus radialement extérieure, dans sa portion de sommet, et de la couche de sommet la plus radialement intérieure d'autre part, soit au plus égale à 0.3 mm, de préférence au plus égale à 0.1 mm. Par distance radiale moyenne respectivement entre les renforts respectifs de deux couches consécutives, on entend la distance mesurée, selon la direction radiale, entre deux renforts appartenant respectivement aux portions de sommet de deux couches en contact l'une avec l'autre. Cette distance maximale, qui caractérise le couplage mécanique entre les couches, conditionne les rigidités du pneumatique.

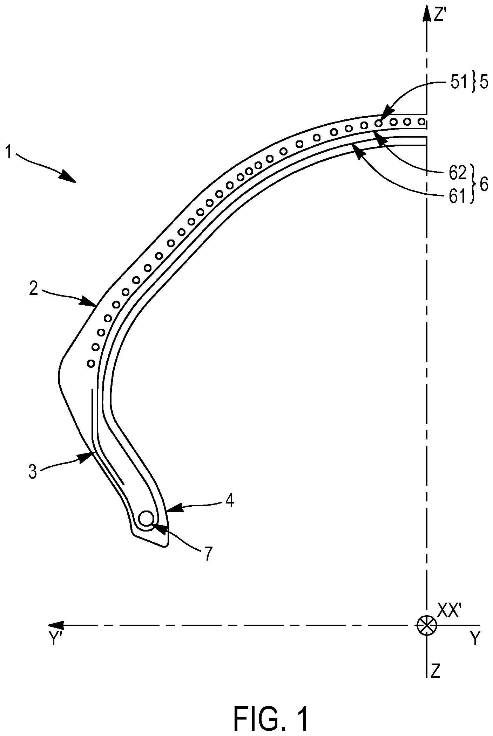

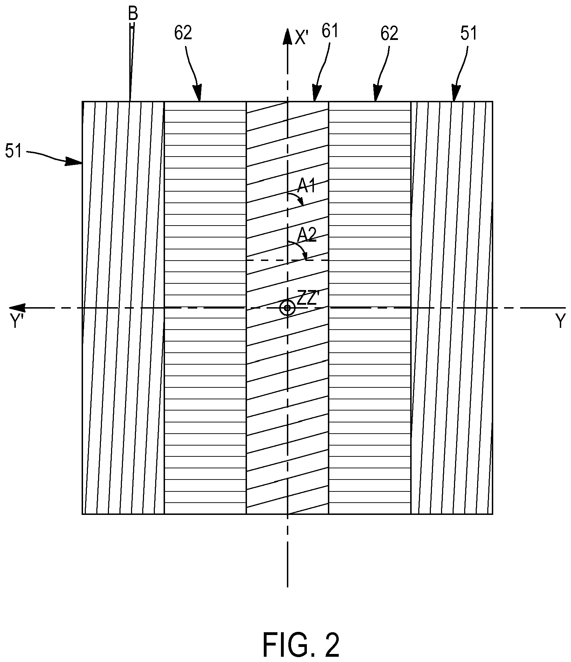

D'autres détails et caractéristiques avantageux de l'invention ressortiront ci-après de la description de l'invention en référence aux figures 1 et 2 qui représentent :
- figure 1 : une demi-coupe méridienne d'un pneumatique de référence de l'état de la technique,
- figure 2 : une vue de dessus du sommet d'un pneumatique selon un mode de réalisation préféré de l'invention.

Les figures 1 et 2 ne sont pas représentées à l'échelle pour en simplifier la compréhension.

La figure 1 représente, dans un plan méridien YZ défini par les directions respectivement axiale YY' et radiale ZZ', une demi-coupe méridienne d'un pneumatique 1 pour véhicule motorisé à deux roues de type moto, comprenant une bande de roulement 2 reliée par deux flancs 3 à deux bourrelets 4, chaque bourrelet 4 comprenant un élément de renforcement circonférentiel métallique ou tringle 7. Le pneumatique 1 comprend une armature de sommet 5 s'étendant radialement à l'intérieur de la bande de roulement 2 et comprenant une unique couche de sommet 51, la couche de sommet 51 comprenant des renforts parallèles entre eux formant, avec une direction circonférentielle XX' du pneumatique, un angle B au plus égal à 5°. En outre le pneumatique 1 comprend une armature de carcasse 6 s'étendant radialement à l'intérieur de l'armature de sommet 5 jusque dans les bourrelets 4 et constituée de deux couches de carcasse (61, 62), chacune des deux couches de carcasse (61, 62) comprenant des renforts parallèles entre eux formant, avec la direction circonférentielle XX' du pneumatique, un angle (A1, A2) au moins égal à 65°. La couche radialement intérieure 61 est une couche de carcasse retournée autour de la tringle 7, alors que la couche de 62 radialement extérieure est une couche de carcasse non retournée ou embarrée. Une portion d'extrémité libre de la carcasse non retournée 62 est axialement intérieure et en contact avec le retournement de la couche de carcasse retournée 61.

La figure 2 présente une vue de dessus d'une portion de sommet d'un pneumatique selon l'invention. Plus précisément, c'est une vue en coupe illustrant les angles respectifs des couches radialement superposées de l'intérieur vers l'extérieur : une première couche de carcasse radialement intérieure 61, une deuxième couche de carcasse radialement extérieure 62 et la couche de sommet 51. Selon l'invention, les renforts de la première couche de carcasse 61 forment, avec la direction circonférentielle XX', un angle A₁ au plus égal à 75°. Les renforts de la deuxième couche de carcasse 62 forment, avec la direction circonférentielle XX', un angle A₂ au moins égal à 80° et au plus égal à 90°. La différence entre les angles (A1, A2) des renforts respectifs des première et deuxième couches de carcasse (61, 62) est au moins égale à 10° et au plus égale à 20°. Les angles (A1, A2) des renforts respectifs des première et deuxième couches de carcasse (61, 62) sont orientés dans le même sens. La couche de sommet 51 comprend des renforts parallèles entre eux formant, avec la direction circonférentielle XX', un angle B au plus égal à 5°.

L'invention a été plus particulièrement étudiée dans la dimension 200/55 ZR 17. Dans ce cas particulier, l'angle A1 des renforts de la première couche de carcasse retournée radialement intérieure est égal à 75°, l'angle A2 des renforts de la deuxième couche de carcasse non retournée radialement extérieure est égal à 90° et l'angle B des renforts de l'unique couche de sommet est égal à 0°. Cette architecture a été comparée à celle d'un pneumatique de l'état de la technique, comprenant une première couche de carcasse retournée radialement intérieure dont les renforts forment un angle A1 égal à - 80°, une deuxième couche de carcasse non retournée radialement extérieure dont les renforts forment un angle A2 égal à +80°, donc croisés par rapport à ceux de la première couche de carcasse, et une couche de sommet dont les renforts sont circonférentiels.

Dans cette étude, les renforts des deux couches de carcasse sont en polyester, alors que les renforts de la couche de sommet sont en aramide. De plus, la distance radiale moyenne respectivement entre les renforts respectifs de deux couches de carcasse consécutives, dans leurs portions de sommet, d'une part, et entre les renforts respectifs de la couche de carcasse la plus radialement extérieure, dans sa portion de sommet, et de la couche de sommet d'autre part, est égale à 0.1 mm pour le pneumatique selon l'invention et à 0.3 mm pour le pneumatique de référence de l'état de la technique.

Les deux pneumatiques ont été testés sur moto dans des tests subjectifs de stabilité en ligne droite et en courbe. Les résultats obtenus sont présentés dans le tableau 1 ci-dessous :

**Tableau 1**

| | Référence | Invention |
|---|---|---|
| Stabilité en ligne droite | 100 | 120 |
| Stabilité en courbe | 100 | 140 |

L'invention ne doit pas être comprise comme étant limitée à la description des exemples ci-dessus et s'étend notamment à des pneumatiques pouvant comporter des armatures de carcasse comprenant plus de deux couches de carcasse et une armature de sommet comprenant plus d'une couche de sommet. Par ailleurs, toutes les combinaisons de couches de carcasse retournées et/ou non retournées sont envisageables. Enfin, les renforts de couche de sommet ne sont pas limités aux matériaux textiles, mais peuvent être métalliques.

## Revendications

1. Pneumatique (1) pour véhicule motorisé à deux roues de type moto comprenant :
- une bande de roulement (2) reliée par deux flancs (3) à deux bourrelets (4), chaque bourrelet (4) comprenant un élément de renforcement circonférentiel métallique ou tringle (7),
- une armature de sommet (5) s'étendant radialement à l'intérieur de la bande de roulement (2) et comprenant au moins une couche de sommet (51), la au moins une couche de sommet (51) comprenant des renforts parallèles entre eux formant, avec une direction circonférentielle (XX') du pneumatique, un angle (B) au plus égal à 5°,
- une armature de carcasse (6) s'étendant radialement à l'intérieur de l'armature de sommet (5) jusque dans les bourrelets (4) et comprenant au moins deux couches de carcasse (61, 62), chacune des au moins deux couches de carcasse (61, 62) comprenant des renforts parallèles entre eux formant, avec la direction circonférentielle (XX') du pneumatique, un angle (A1, A2) au moins égal à 65°.
- les renforts d'une première couche de carcasse (61) forment, avec la direction circonférentielle (XX'), un angle (A1) au plus égal à 75°,
- les renforts d'une deuxième couche de carcasse (62) forment, avec la direction circonférentielle (XX'), un angle (A2) au moins égal à 80° et au plus égal à 90°,
**caractérisé en ce que** la différence entre les angles (A1, A2) des renforts respectifs des première et deuxième couches de carcasse (61, 62) est au moins égale à 10° et au plus égale à 20° et **en ce que** les angles (A1, A2) des renforts respectifs des première et deuxième couches de carcasse (61, 62) sont orientés dans le même sens.

2. Pneumatique (1) selon la revendication 1, **dans lequel** l'armature de carcasse (6) est constituée de deux couches de carcasse (61, 62).

3. Pneumatique (1) selon l'une des revendications 1 ou 2, **dans lequel** la première couche de carcasse (61) est une couche de carcasse retournée autour de la tringle (7) de chaque bourrelet (4).

4. Pneumatique (1) selon l'une quelconque des revendications 1 à 3, **dans lequel** la première couche de carcasse (61) est radialement intérieure à la deuxième couche de carcasse (62).

5. Pneumatique (1) selon l'une quelconque des revendications 1 à 4, chaque bourrelet (4) comprenant un élément de renforcement circonférentiel métallique ou tringle (7), **dans lequel** la deuxième couche de carcasse (62) est une couche de carcasse non retournée autour de la tringle (7) de chaque bourrelet (4).

6. Pneumatique (1) selon l'une quelconque des revendications 1 à 5, **dans lequel** les renforts respectifs des première et deuxième couches de carcasse (61, 62) sont constitués de matériau textile.

7. Pneumatique (1) selon l'une quelconque des revendications 1 à 6, **dans lequel** les renforts respectifs des première et deuxième couches de carcasses (61, 62) sont constitués du même matériau textile.

8. Pneumatique (1) selon l'une quelconque des revendications 1 à 7, **dans lequel** les renforts respectifs des première et deuxième couches de carcasse (61, 62) sont constitués de polyester.

9. Pneumatique (1) selon l'une quelconque des revendications 1 à 8, **dans lequel** l'armature de sommet (5) est constituée d'une seule couche de sommet (51).

10. Pneumatique (1) selon l'une quelconque des revendications 1 à 9, **dans lequel** les renforts de la au moins une couche de sommet (51) sont constitués de matériau textile, de préférence de polyamide aromatique.

11. Pneumatique (1) selon l'une quelconque des revendications 1 à 10, chacune des au moins deux couches de carcasse (61, 62) ayant une portion de sommet s'étendant symétriquement de part et d'autre d'un plan équatorial (XZ) passant par le milieu de la bande de roulement (2) et perpendiculaire à un axe de rotation (YY') du pneumatique, **dans lequel** la distance radiale moyenne (d₁, d₂) respectivement entre les renforts respectifs de deux couches de carcasse consécutives (61, 62), dans leurs portions de sommet, d'une part, et entre les renforts respectifs de la couche de carcasse la plus radialement extérieure (62), dans sa portion de sommet, et de la couche de sommet la plus radialement intérieure (51) d'autre part, est au plus égale à 0.3 mm, de préférence au plus égale à 0.1 mm.

## Patentansprüche

1. Reifen (1) für ein motorisiertes zweirädriges Kraftradfahrzeug des Typs des Motorrads, umfassend:
- eine Lauffläche (2), die durch zwei Flanken (3) mit zwei Wülsten (4) verbunden ist, wobei jeder Wulst (4) ein metallisches Umfangsverstärkungselement oder einen Wulstkern (7) aufweist,
- eine Scheitelbewehrung (5), die sich radial innerhalb der Lauffläche (2) erstreckt und mindestens eine Scheitelschicht (51) aufweist, wobei die mindestens eine Scheitelschicht (51) Verstärkungen aufweist, die untereinander parallel sind, die mit einer Umfangsrichtung (XX') des Reifens einen Winkel (B) von höchstens gleich 5° bilden,
- eine Scheitelbewehrung (6), die sich radial innerhalb der Scheitelbewehrung (5) bis in die Wulste (4) erstreckt und mindestens zwei Karkassenlagen (61, 62) aufweist, wobei jede der mindestens zwei Karkassenlagen (61, 62) Verstärkungen aufweist, die untereinander parallel sind, die mit der Umfangsrichtung (XX') des Reifens einen Winkel (A1, A2) von höchstens gleich 65° bilden,
- die Verstärkungen von einer ersten Karkassenlage (61) bilden mit der Umfangsrichtung (XX') einen Winkel (A1) von höchstens gleich 75°,
- die Verstärkungen von einer zweiten Karkassenlage (62) bilden mit der Umfangsrichtung (XX') einen Winkel (A2) von mindestens gleich 80° und von höchstens gleich 90°,
**dadurch gekennzeichnet, dass**
der Unterschied zwischen den Winkeln (A1, A2) der jeweiligen Verstärkungen der ersten und der zweiten Karkassenlage (61, 62) mindestens gleich 10° und höchstens gleich 20° beträgt und dadurch, dass die Winkel (A1, A2) der jeweiligen Verstärkungen der ersten und der zweiten Karkassenlage (61, 62) in die gleiche Richtung ausgerichtet sind.

2. Reifen (1) nach Anspruch 1, wobei die Karkassenbewehrung (6) aus zwei Karkassenlagen (61, 62) gebildet ist.

3. Reifen (1) nach einem der Ansprüche 1 oder 2, wobei die erste Karkassenlage (61) eine Karkassenlage ist, die um den Wulstkern (7) von jedem Wulst (4) umgeschlagen ist.

4. Reifen (1) nach einem der Ansprüche 1 bis 3, wobei die erste Karkassenlage (61) radial innerhalb der zweiten Karkassenlage (62) ist.

5. Reifen (1) nach einem der Ansprüche 1 bis 4, wobei jeder Wulst (4) ein metallisches Umfangsverstärkungselement oder einen Wulstkern (7) aufweist, wobei die zweite Karkassenlage (62) eine Karkassenlage ist, die nicht um den Wulstkern (7) von jedem Wulst (4) umgeschlagen ist.

6. Reifen (1) nach einem der Ansprüche 1 bis 5, wobei die jeweiligen Verstärkungen der ersten und der zweiten Karkassenlage (61, 62) aus Textilmaterial gebildet sind.

7. Reifen (1) nach einem der Ansprüche 1 bis 6, wobei die jeweiligen Verstärkungen der ersten und der zweiten Karkassenlage (61, 62) aus dem gleichen Textilmaterial gebildet sind.

8. Reifen (1) nach einem der Ansprüche 1 bis 7, wobei die jeweiligen Verstärkungen der ersten und der zweiten Karkassenlage (61, 62) aus Polyester gebildet sind.

9. Reifen (1) nach einem der Ansprüche 1 bis 8, wobei die Scheitelbewehrung (5) aus einer einzigen Scheitelschicht (51) gebildet ist.

10. Reifen (1) nach einem der Ansprüche 1 bis 9, wobei die Verstärkungen der mindestens einen Scheitelschicht (51) aus Textilmaterial, vorzugsweise aus aromatischem Polyamid, gebildet sind.

11. Reifen (1) nach einem der Ansprüche 1 bis 10, wobei jede der mindestens zwei Karkassenlagen (61, 62) einen Scheitelabschnitt aufweist, der sich symmetrisch beiderseits einer Äquatorialebene (XZ) erstreckt, die durch die Mitte der Lauffläche (2) und senkrecht zu einer Drehachse (YY') des Reifens verläuft, wobei der mittlere radiale Abstand (d₁, d₂) jeweils zwischen den jeweiligen Verstärkungen von zwei aufeinanderfolgenden Karkassenlagen (61, 62) in ihren Scheitelabschnitten einerseits und zwischen den jeweiligen Verstärkungen der radial äußersten Karkassenlage (62) in ihrem Scheitelabschnitt und der radial innersten Scheitellage (51) andererseits höchstens gleich 0,3 mm, vorzugsweise höchstens gleich 0,1 mm ist.

## Claims

1. Tyre (1) for a motorized two-wheel vehicle of the motorbike type, comprising:
- a tread (2) connected by two sidewalls (3) to two beads (4), each bead (4) comprising a metal circumferential reinforcing element or bead wire (7),
- a crown reinforcement (5) extending radially inside the tread (2) and comprising at least one crown layer (51), the at least one crown layer (51) comprising mutually parallel reinforcers forming, with a circumferential direction (XX') of the tyre, an angle (B) at most equal to 5°,
- a carcass reinforcement (6) extending radially on the inside of the crown reinforcement (5) as far as into the beads (4) and comprising at least two carcass layers (61, 62), each of the at least two carcass layers (61, 62) comprising mutually parallel reinforcers forming, with the circumferential direction (XX') of the tyre, an angle (A1, A2) at least equal to 65°,
**characterized in that** the reinforcers of a first carcass layer (61) form, with the circumferential direction (XX'), an angle (A₁) at most equal to 75°, **in that** the reinforcers of a second carcass layer (62) form, with the circumferential direction (XX'), an angle (A₂) at least equal to 80° and at most equal to 90°, **in that** the difference between the angles (A1, A2) of the respective reinforcers of the first and second carcass layers (61, 62) is at least equal to 10° and at most equal to 20° **and in that** the angles (A1, A2) of the respective reinforcers of the first and second carcass layers (61, 62) are oriented in the same direction.

2. Tyre (1) according to Claim 1, **in which** the carcass reinforcement (6) is made up of two carcass layers (61, 62).

3. Tyre (1) according to one of Claims 1 and 2, **in which** the first carcass layer (61) is a carcass layer turned up around the bead wire (7) of each bead (4).

4. Tyre (1) according to any one of Claims 1 to 3, **in which** the first carcass layer (61) is radially on the inside of the second carcass layer (62).

5. Tyre (1) according to any one of Claims 1 to 4, each bead (4) comprising a metallic circumferential reinforcing element or bead wire (7), **in which** the second carcass layer (62) is a carcass layer not turned up around the bead wire (7) of each bead (4).

6. Tyre (1) according to any one of Claims 1 to 5, **in which** the respective reinforcers of the first and second carcass layers (61, 62) are made of textile material.

7. Tyre (1) according to any one of Claims 1 to 6, **in which** the respective reinforcers of the first and second carcass layers (61, 62) are made of the same textile material.

8. Tyre (1) according to any one of Claims 1 to 7, **in which** the respective reinforcers of the first and second carcass layers (61, 62) are made of polyester.

9. Tyre (1) according to any one of Claims 1 to 8, **in which** the crown reinforcement (5) is made of one single crown layer (51).

10. Tyre (1) according to any one of Claims 1 to 9, **in which** the reinforcers of the at least one crown layer (51) are made of textile material, preferably aromatic polyamide.

11. Tyre (1) according to any one of Claims 1 to 10, each of the at least two carcass layers (61, 62) having a crown portion extending symmetrically on each side of an equatorial plane (XZ) passing through the middle of the tread (2) and perpendicular to an axis of rotation (YY') of the tyre, **in which** the mean radial distance (d₁, d₂) respectively between the respective reinforcers of two consecutive carcass layers (61, 62), in their crown portions, on the one hand, and between the respective reinforcers of the radially outermost carcass layer (62), in its crown portion, and of the radially innermost crown layer (51), on the other hand, is at most equal to 0.3 mm, preferably at most equal to 0.1 mm.
